# FASCICULE DE BREVET EUROPEEN

(11) **EP 4 273 815 B1**
(45) Date de publication et mention de la délivrance du brevet: **03.07.2024**
(21) Numéro de dépôt: 23166389.9
(22) Date de dépôt: 03.04.2023
(51) Int. Cl.: G06V 40/12

(54) **PROCÉDÉ DE GÉNÉRATION D'UNE IMAGE DE PAUME À PARTIR D'IMAGES DE PAUME PARTIELLES**
VERFAHREN ZUR ERZEUGUNG EINES HANDFLÄCHENBILDES AUS TEILFLÄCHENBILDERN
METHOD FOR GENERATING A PALM IMAGE FROM PARTIAL PALM IMAGES

(30) Priorité: 03.05.2022 FR 2204184
(43) Date de publication de la demande: 08.11.2023
(73) Titulaire: IDEMIA Identity & Security France, 92400 Courbevoie (FR)
(72) Inventeur: MABYALAHT, Guy, 92400 COURBEVOIE (FR); KAZDAGHLI, Laurent, 92400 COURBEVOIE (FR)
(74) Mandataire: Idemia

(56) Documents cités:
- CN-A- 104 268 542
- US-A1- 2018 113 064
- US-A1- 2019 101 484
- US-A1- 2019 180 147
- US-A1- 2020 034 996

## Description

L'invention concerne le domaine de l'imagerie biométrique, en particulier l'imagerie d'empreinte palmaire.

Il est connu de l'état de la technique des dispositifs d'acquisition d'empreinte palmaire biométrique comprenant une surface d'acquisition d'empreinte par contact permettant l'acquisition d'une paume entière d'un individu. Ces dispositifs sont assez lourds, encombrants et non facilement transportables. Ces dispositifs ne sont pas adaptés pour une utilisation sur terrain.

Il existe un besoin d'effectuer des acquisitions d'empreinte palmaire par contact avec un dispositif transportable de petite taille. Un tel dispositif permet l'acquisition de paumes partielles mais pas l'acquisition d'une paume entière. Le problème qui se pose alors est de reconstituer une image de paume entière à partir de plusieurs images de paumes partielles.

Les procédés de reconstruction d'image à partir d'images partielles issues d'un enroulé biométrique, par exemple de doigt, sont connus mais ne font pas face aux mêmes problèmes techniques, les images partielles étant acquises en continu, la reconstruction ne nécessitant pas d'identifier des couplages de points entre images partielles.

Les procédés de reconstruction d'image à partir d'images partielles de doigts, par exemple via l'utilisation d'un capteur de téléphone, ne font pas non plus face aux mêmes problèmes techniques, les images partielles étant de petite taille et ne présentant pas de fortes distorsions. Document US 2020/034996 A1 divulgue un procédé de fusion d'images de deux objets.

L'invention vise à résoudre les problèmes susmentionnés de l'état de la technique en proposant un procédé de génération d'une image de paume d'un individu à partir d'images de paume partielle non acquises de manière continue et corrigeant les distorsions.

L'invention porte sur un procédé de génération d'une image de paume d'un individu par un calculateur à partir d'une première image de paume partielle de l'individu et d'une deuxième image de paume partielle dudit individu comprenant une zone de recouvrement avec ladite première image,
- une étape de détection de premiers points caractéristiques de la paume dans la première image et de deuxièmes points caractéristiques de la paume dans la deuxième image, pour un type de points caractéristiques prédéterminé,
- une étape de couplage générant une pluralité de couples de points caractéristiques par la mise en correspondance dans la zone de recouvrement d'une pluralité de premiers points caractéristiques avec une pluralité de deuxièmes points caractéristiques,
- une étape de calcul d'une transformation géométrique globale associée à ladite mise en correspondance,
- une étape de détermination pour chaque couple de points de pluralité de couples de points caractéristiques, d'une transformation géométrique locale,
- une étape de fusion de la première image avec la deuxième image en une image fusionnée, en fonction de la transformation géométrique globale et des transformations géométriques locales , l'image de paume comprenant l'image fusionnée.

Selon un aspect de l'invention, la première image et la deuxième image sont issues d'une acquisition par un dispositif d'acquisition d'empreinte biométrique par contact.

Selon un aspect de l'invention, l'individu a retiré sa paume de la surface d'acquisition entre l'acquisition associée à la première image et l'acquisition associée à la deuxième image.

Selon un aspect de l'invention, le type prédéterminé est choisi parmi une liste comprenant le type descripteur ORB, le type descripteur SIFT, le type minutie.

Selon un aspect de l'invention, le procédé de génération comprend en outre une étape de validation dans laquelle la mise en correspondance est validée ou invalidée, les étapes de détection, de couplage et de validation étant réitérées avec un autre type prédéterminé de points caractéristiques si la mise en correspondance de l'itération précédente est invalidée.

Selon un aspect de l'invention, le type prédéterminé associé à chaque itération est fonction d'un ordre préétabli.

Selon un aspect de l'invention, la mise en correspondance est validée si la pluralité de couples de points caractéristiques comprend un nombre de couples supérieur à un premier seuil prédéterminé et est associée à une surface induite de paume supérieure à un deuxième seuil prédéterminé.

Selon un aspect de l'invention, l'étape de calcul comprend le calcul d'une transformation linéaire globale et d'une erreur globale résiduelle associée, une transformation non linéaire globale étant calculée si l'erreur globale résiduelle est supérieure à une erreur seuil prédéterminée.

Selon un aspect de l'invention, une transformation géométrique locale est déterminée de sorte à minimiser une erreur locale résiduelle pour le couple de points associé selon l'étape de détermination, l'étape de fusion comprenant pour chaque couple de points, une modification des pixels de la première image ou de la deuxième image dans une région de taille prédéterminée comprenant ledit couple de points, en fonction de la transformation géométrique locale associée audit couple de points.

Selon un aspect de l'invention, des pixels appartenant à plusieurs régions sont modifiés selon une moyenne des transformations géométriques locales associées audites régions.

Selon un aspect de l'invention, une région est centrée sur le couple de points associé et la taille prédéterminée est comprise entre trente et soixante-dix pixels.

Selon un aspect de l'invention, le calculateur dispose en outre d'au moins une image additionnelle de paume partielle, le procédé comprenant la réitération des étapes de détection, de couplage, de calcul, de détermination et de fusion, avec pour première image, l'image fusionnée de l'étape de fusion précédente, et pour deuxième image, une image additionnelle comprenant une autre zone de recouvrement avec ladite image fusionnée, le procédé étant réitéré pour chaque image additionnelle, l'image de paume comprenant l'image fusionnée issue de la dernière itération.

L'invention porte également sur un programme d'ordinateur comprenant les instructions de programme mettant en oeuvre les étapes du procédé de génération, lorsque les instructions de programme sont exécutées par un ordinateur.

L'invention porte également sur un dispositif d'acquisition d'empreinte biométrique par contact comprenant un calculateur apte à mettre en oeuvre les étapes du procédé de l'invention.

D'autres avantages et caractéristiques de l'invention apparaîtront à la lecture de la description et des dessins.
La figure 1 illustre les étapes du procédé selon l'invention.
La figure 2 illustre deux images partielles comprenant une zone de recouvrement dans laquelle sont identifiés des couples de points caractéristiques.
La figure 3 illustre un exemple de cinq images partielles de paume de main d'un utilisateur.
La figure 4 illustre une image de paume générée selon le procédé de l'invention à partir des cinq images de la figure 3.

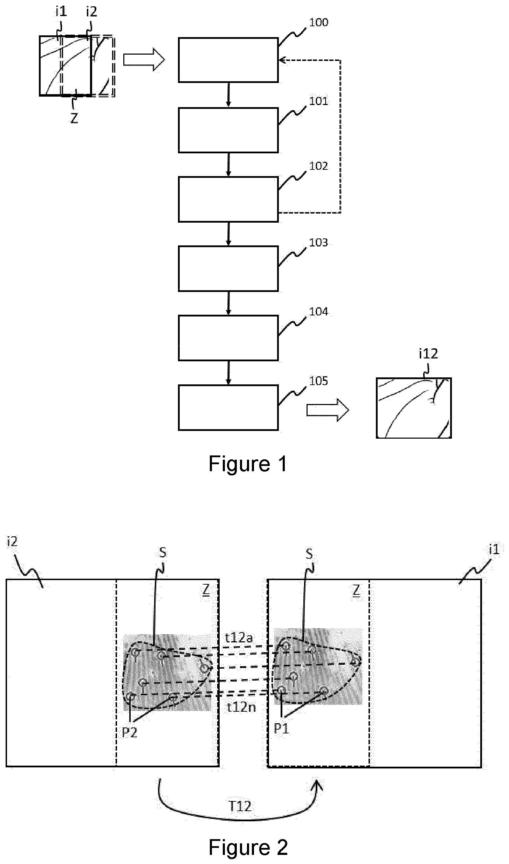

La figure 1 illustre les étapes du procédé de l'invention, aptes à être mises en oeuvre par un calculateur d'un dispositif d'acquisition, à partir de deux images de paume partielle d'un individu comprenant une zone de recouvrement, pour générer une image de paume dudit individu.

Une paume d'un individu comprend en sa surface un réseau de monts et/ou sillons qui correspondent à une empreinte biométrique. Une image de paume partielle comprend une portion de ladite empreinte biométrique.

Les deux images de paume partielles comprennent une première image i1 de paume partielle et une deuxième image i2 de paume partielle.

La première image i1 de paume partielle et la deuxième image i2 de paume partielle comprennent chacune une zone de recouvrement Z avec l'autre image de paume partielle.

Par exemple, comme illustré sur la figure 1, la première image i1 est une image de centre de paume d'une main droite d'un utilisateur. La deuxième image i2 est une image de l'éminence thénar de ladite main droite de l'utilisateur.

La première image i1 et la deuxième image i2 ont une partie de paume de main commune qui correspond à la zone de recouvrement Z.

Par exemple la zone de recouvrement Z correspond à la moitié droite de la première image i1 et la moitié gauche de la deuxième image i2.

Le procédé de l'invention comprend une étape de détection 100, une étape de couplage 101, optionnellement une étape de validation 102, une étape de calcul 103, une étape de détermination 104, une étape de fusion 105.

Selon l'étape de détection 100, le calculateur détecte des points caractéristiques dans les deux images de paume partielle comprenant une zone de recouvrement Z d'une image avec l'autre image.

Comme illustré sur la figure 2, l'étape de détection 100 comprend la détection de premiers points caractéristiques P1 de la paume dans la première image i1 et de deuxièmes points caractéristiques P2 de la paume dans la deuxième image i2, pour un type de points caractéristiques prédéterminé.

Les points caractéristiques sont d'un type prédéterminé connu de l'état de la technique, le type étant choisi parmi le type descripteur ORB, le type descripteur SIFT, le type descripteur SURF, le type minutie, le type pore.

Les descripteurs ORB, SIFT et SURF sont connus de l'état de la technique et sont utilisables pour le traitement d'images traditionnelles.

Les minuties et les pores sont également connus de l'état de la technique et sont plus spécifiques au traitement d'images d'empreintes digitales et palmaires.

D'autres méthodes, telles que basées sur des réseaux de neurones, permettent également la détection de points caractéristiques.

De préférence, le type prédéterminé est choisi, dans l'ordre préétabli ci-après, parmi le type descripteur ORB, le type descripteur SIFT, le type minutie.

Par exemple, le calculateur choisit le type de points caractéristiques prédéterminé qui est premier dans l'ordre préétabli. Le calculateur choisit le type ORB.

Le calculateur détecte dans la première image i1 des premiers points caractéristiques P1 du type choisi, dans cet exemple du type ORB.

Le calculateur détecte dans la deuxième image i2 des deuxièmes points caractéristiques P2 du type choisi, dans cet exemple du type ORB.

Selon l'étape de couplage 101, le calculateur génère une pluralité de couples de points caractéristiques par la mise en correspondance dans la zone de recouvrement Z d'une pluralité de premiers points caractéristiques P1 avec une pluralité de deuxièmes points caractéristiques P2.

La mise en correspondance comprend l'association de vecteurs associés aux premiers points caractéristiques P1 et aux deuxièmes points caractéristiques P2 afin de ne conserver que les premiers points caractéristiques P1 et les deuxièmes points caractéristiques P2 qui sont présents dans la première image i1 et dans la deuxième image i2, c'est-à-dire localisés dans la zone de recouvrement Z.

L'association est réalisée par exemple en calculant une distance entre les vecteurs pour toutes les combinaisons possibles entre les premiers points caractéristiques P1 et les deuxièmes points caractéristiques P2. Lorsque la distance calculée pour un premier point caractéristique P1 et un deuxième point caractéristique P2 est inférieure à une valeur prédéterminée, le calculateur détermine une forte probabilité de correspondance entre ledit premier point caractéristique P1 de la première image i1 avec ledit deuxième point caractéristique P2 de la deuxième image i2 et génère un couple de points caractéristiques correspondant.

Le calculateur effectue un calcul de distance de vecteurs pour toutes les combinaisons possibles entre les premiers points caractéristiques P1 et les deuxièmes points caractéristiques P2. Etant donné que la première image i1 et la deuxième image i2 comprennent une zone de recouvrement Z, le calculateur peut mettre en correspondance une pluralité de premiers points caractéristiques P1 avec une pluralité de deuxièmes points caractéristiques P2 et générer une pluralité de couples de points caractéristiques.

Par exemple, la distance est une distance de Hamming.

Selon l'étape de validation 102 optionnelle, le calculateur valide ou invalide ladite mise en correspondance.

La mise en correspondance est validée si la pluralité de couples de points caractéristiques comprend un nombre de couples supérieur à un premier seuil prédéterminé et est associée à une surface induite S de paume supérieure à un deuxième seuil prédéterminé.

La surface induite S est délimitée dans chaque première et deuxième image par une enveloppe de l'ensemble comprenant la pluralité de premiers points caractéristiques et de deuxième points caractéristiques.

La surface induite S contient dans chaque première et deuxième image, la pluralité de premiers points caractéristiques et de deuxième points caractéristiques.

Etant donné que la pluralité de premiers points caractéristiques et la pluralité de deuxième points caractéristiques sont associées en une pluralité de couples de points caractéristiques selon la mise en correspondance, la surface induite S dans la première image est la même que la surface S dans la deuxième image.

Avantageusement, le premier seuil est différent selon le type de points caractéristiques choisi par le calculateur.

Par exemple, pour le type descripteur ORB, le premier seuil est compris entre cinquante et deux-cents, typiquement égal à cent.

Par exemple, pour le type descripteur SIFT, le premier seuil est compris entre cent et deux-cents, typiquement égal à cent-cinquante.

Par exemple, pour le type minutie, le premier seuil est compris entre vingt et cinquante, typiquement égal à trente.

De préférence, le deuxième seuil est identique quel que soit le type de points caractéristiques choisi par le calculateur.

Par exemple, le deuxième seuil est compris entre 10000 pixels et 30000 pixels, typiquement égal à 20000 pixels, ce qui correspond à l'équivalent d'un rectangle de 100 pixels par 200 pixels.

Le rectangle équivalent est donné à titre d'exemple illustratif, pour donner un repère visuel de ce que cela représente, la surface induite S n'étant pas forcément rectangle.

Par exemple, la forme de l'enveloppe correspond à la forme de l'ensemble comprenant la pluralité de premiers points caractéristiques ou de deuxième points. La forme dépend alors de la localisation des couples de points caractéristiques. L'enveloppe est de forme quelconque, non prédéterminée.

Par exemple, l'enveloppe est de forme prédéterminée, par exemple un rectangle ou un ovale. L'enveloppe est circonscrite à l'ensemble comprenant la pluralité de premiers points caractéristiques ou de deuxième points caractéristiques.

La mise en correspondance est invalidée si la pluralité de couples de points caractéristiques comprend un nombre de couples inférieur ou égal au premier seuil prédéterminé, ou si la pluralité de couples de points caractéristiques est associée à une surface induite S de paume inférieure ou égale à un deuxième seuil prédéterminé.

Dans le cas d'une mise en correspondance invalidée, les étapes de détection 100, de couplage 101 et de validation 102 sont réitérées avec un autre type prédéterminé de points caractéristiques.

De préférence, le type prédéterminé associé à chaque itération est fonction de l'ordre préétabli mentionné ci-avant.

Par exemple, l'ordre préétabli est :
- le type descripteur ORB,
- le type descripteur SIFT,
- le type minutie.

Pour la première itération des étapes de détection 100, de couplage 101 et de validation 102, le type de points caractéristiques est le type descripteur ORB.

Si lors de la première itération, la mise en correspondance est invalidée, le type de points caractéristiques choisi pour la deuxième itération des étapes de détection 100, de couplage 101 et de validation 102, est le type descripteur SIFT.

Si lors de la deuxième itération, la mise en correspondance est invalidée, le type de points caractéristiques choisi pour la troisième itération des étapes de détection 100, de couplage 101 et de validation 102, est le type minutie.

En fonction des caractéristiques de l'empreinte biométrique de la paume de l'individu, le type de points caractéristiques le plus pertinent pour la mise en correspondance peut varier. C'est pour cela que le procédé de l'invention propose la réitération des étapes de détection 100, de couplage 101 et de validation 102 pour différents types de points caractéristiques.

Si lors de la dernière itération, ici la troisième itération, la mise en correspondance est invalidée, alors peut-être que la zone de recouvrement Z est trop petite, à cause par exemple d'un mauvais positionnement de la paume de la main lors de l'acquisition d'une des images parmi la première image i1 ou la deuxième image i2, ou d'une mauvaise qualité de la première image i1 ou la deuxième image i2, ou dans le cas d'une paume sèche de l'individu. Le calculateur n'est dans ce cas pas apte à générer une image de paume selon le procédé de l'invention.

Par exemple, le calculateur renvoie une erreur, par un message sonore ou visuel.

Lorsque la mise en correspondance est validée selon l'une quelconque des itérations des étapes de détection 100, de couplage 101 et de validation 102, le procédé se poursuit avec l'étape de calcul 103.

Si le procédé de l'invention ne comprend pas l'étape de validation 102, le calculateur met en oeuvre l'étape de calcul 103 après l'étape de couplage 101, sans validation de la mise en correspondance.

Selon l'étape de calcul 103, le calculateur calcule une transformation géométrique globale T12 associée à ladite mise en correspondance.

Pour le calcul de la transformation géométrique globale T12, le calculateur choisit parmi la première image i1 et la deuxième image i2, une image de référence et détermine la transformation géométrique à appliquer à tous les pixels de l'image qui n'est pas l'image de référence par rapport à ladite image de référence, pour que la première image se superpose à la deuxième image en la zone de recouvrement Z en minimisant une erreur globale résiduelle.

Par exemple, le calculateur détermine pour chaque couple de points caractéristiques une transformation géométrique particulière, la transformation géométrique globale étant la transformation géométrique particulière qui reçoit le plus de votes (c'est-à-dire dont l'occurrence est la plus forte) au sein de la pluralité de couple de points caractéristiques.

Selon un autre exemple, la transformation géométrique globale est la moyenne des transformations géométriques particulières.

L'étape de calcul 103 comprend le calcul d'une transformation linéaire globale et d'une erreur globale résiduelle associée.

Par exemple, la transformation linéaire globale est déterminée par une décomposition en valeur singulière.

Par exemple, la transformation linéaire globale est déterminée par une transformée linéaire directe.

Le calculateur calcule une transformation linéaire globale associant pour la pluralité de couples de points caractéristiques, la pluralité de points caractéristiques de l'image autre que l'image de référence avec la pluralité de points caractéristiques de l'image de référence.

Par exemple, l'image de référence est la première image i1.

Le calculateur calcule la transformation linéaire globale associant la pluralité de deuxièmes points caractéristiques avec la pluralité de premiers points caractéristiques.

A partir de la transformation linéaire globale calculée, le calculateur détermine la position de la transformée de la pluralité de deuxièmes points caractéristiques par la transformation linéaire globale, par rapport à la position des premiers points caractéristiques.

Ensuite le calculateur détermine l'erreur globale résiduelle.

Par exemple, l'erreur résiduelle correspond à une distance entre la position des premiers points caractéristiques et la position de la transformée des deuxièmes points caractéristiques par la transformation linéaire globale.

Par exemple, l'erreur globale résiduelle comprend une moyenne des distances pour chaque couple de points caractéristiques, entre la position du premier point caractéristique et la position de la transformée du deuxième point caractéristique associé, par la transformation linéaire globale.

L'erreur globale résiduelle est comparée à une erreur seuil prédéterminée.

Par exemple, l'erreur seuil prédéterminée est comprise entre trois et dix pixels, typiquement égale à cinq pixel.

Par exemple, l'erreur résiduelle est fonction d'une diagonalité d'une matrice de transformation associée à la transformation linéaire globale.

Par exemple, l'erreur résiduelle est fonction d'un facteur de déformation d'une extrémité de la surface induite S à une autre extrémité de la surface induite S.

Par exemple, l'erreur résiduelle est fonction d'un nombre de votes associé à la transformation géométrique particulière qui reçoit le plus de votes.

Si l'erreur globale résiduelle est supérieure à l'erreur seuil prédéterminée, le calculateur calcule une transformation non linéaire globale.

Par exemple, la transformation non linéaire globale est calculée à partir de la transformation linéaire globale précédemment calculée.

Le calculateur détermine une deuxième erreur globale résiduelle associée à la transformation non linéaire globale, selon l'une des méthodes décrites pour l'erreur globale résiduelle associée à la transformation linéaire globale.

Si la deuxième erreur globale résiduelle est supérieure à l'erreur seuil prédéterminée, le calculateur renvoie une erreur, par un message sonore ou visuel.

Si le calculateur a calculé une transformation géométrique globale, linéaire ou non linéaire, associée à une erreur globale résiduelle ou une deuxième erreur globale résiduelle inférieure à l'erreur seuil prédéterminée, alors la transformation géométrique globale est validée.

Calculer une transformation géométrique globale n'est pas suffisant pour générer une image de paume d'une bonne qualité car la première image et la deuxième image sont issues de deux acquisitions correspondant à deux positionnements de paume distincts sur une surface d'acquisition par contact, l'individu ayant retiré sa paume de la surface d'acquisition entre deux positionnements.

Ainsi, le calculateur ne connait pas a priori ni la taille ni la position exacte dans la première et la deuxième image de la zone de recouvrement Z, ni l'ampleur des déformations locales dues à la force d'appui par l'individu sur la surface d'acquisition par contact.

Du fait que la peau de la paume est élastique, et que la partie de paume posée sur la surface d'acquisition est différente pour chaque acquisition d'image de paume partielle, il existe des déformations locales non homogènes entre images de paume partielle. Il est nécessaire de déterminer des transformations géométriques locales.

Selon l'étape de détermination 104, le calculateur détermine pour chaque couple de points de la pluralité de couples de points caractéristiques, une transformation géométrique locale t12a-t12n, comme illustré sur la figure 2.

Pour un couple de points, la transformation géométrique locale t12a-t12n associée est déterminée de manière à minimiser une erreur locale résiduelle, par exemple par une résolution de systèmes d'équations linéaires.

Par exemple, la transformation géométrique locale est linéaire.

Par exemple, la transformation géométrique locale est affine ou projective.

Par exemple, la transformation géométrique locale est non linéaire.

Par exemple, la transformation géométrique est issue d'un modèle de transformation prédéterminé.

Par exemple, l'erreur locale résiduelle pour un couple de points caractéristiques, est déterminée par une distance entre la position du premier point caractéristique du couple de points et la position de la transformée du deuxième point caractéristique du couple de points, par la transformation géométrique locale.

Selon l'étape de fusion 105, le calculateur fusionne la première image i1 avec la deuxième image i2 en une image fusionnée i12, en fonction de la transformation géométrique globale T12 et des transformations géométriques locales t12a-t12n.

L'image fusionnée i12 est obtenue par superposition de l'image de référence, par exemple la première image et de la transformée de l'image autre que l'image de référence, par exemple la deuxième image, par la transformation géométrique globale T12 et les transformations géométriques locales t12a-t12n.

La transformation géométrique globale est appliquée à tous les pixels de l'image autre que l'image de référence, ici la deuxième image i2.

Une modification des pixels selon une transformation géométrique locale t12a-t12n est en outre appliqué à l'image autre que l'image de référence, ici la deuxième image i2, dans une région de taille prédéterminée comprenant le couple de points associé à ladite transformation géométrique locale t12a-t12n.

De préférence, une région est centrée sur le couple de points qui lui est associé.

Par exemple, la taille prédéterminée est comprise entre trente et soixante-dix pixels, typiquement cinquante pixels.

Des pixels appartenant à plusieurs régions sont modifiés dans l'image autre que l'image de référence, selon une moyenne des transformations géométriques locales t12a-t12n associées audites régions.

L'image de paume générée par le procédé de l'invention comprend l'image fusionnée i12.

Par exemple, l'image de paume est l'image fusionnée i12 issue de la mise en oeuvre du procédé de l'invention, à partir d'une première image et d'une deuxième image.

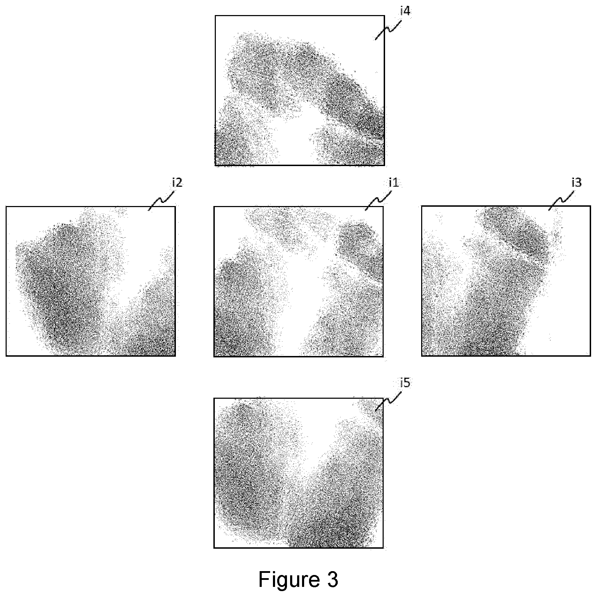

Par exemple, le calculateur dispose en outre d'au moins une image additionnelle i3, i4, i5 de paume partielle, comme illustré sur la figure 3.

La figure 3 illustre cinq images de paume partielle d'une paume de main gauche d'un individu :
- une première image i1 de centre de paume, acquise de préférence en appuyant au centre de la main pour que le creux de la main soit imagé,
- une deuxième image i2 de partie gauche de paume, comprenant l'éminence thénar,
- une troisième image i3 de partie droite de paume, comprenant l'éminence hypothénar,
- une quatrième image i4 de partie haute de paume, comprenant la zone interdigitale,
- une cinquième image i5 de partie basse de paume, comprenant la base du poignet, les troisième, quatrième et cinquième images i3, i4, i5 étant des images additionnelles au sens de l'invention.

Il est avantageux que l'une parmi la première image i1 ou la deuxième image i2 comprenne une image de paume partielle comportant le centre de la paume. Ainsi, toutes les images additionnelles de paume partielle comprennent une zone de recouvrement avec l'image fusionnée i12 issue de la fusion entre la première image i1 ou la deuxième image i2

Par exemple, comme illustré sur la figure 3, la première image i1 comprend le centre de paume de l'individu.

La deuxième image i2 comprend une zone de recouvrement avec la première image i1, la zone de recouvrement comportant une portion de centre de paume.

Les images additionnelles i3, i4, i5 comprennent chacune une zone de recouvrement comportant une autre portion de centre de paume.

Pour générer une image de paume à partir d'au moins une image additionnelle i3, i4, i5 en plus des première et deuxième images, le procédé comprend la réitération des étapes de détection 100, de couplage 101, de validation 102 si elle existe, de calcul 103, de détermination 104 et de fusion 105, avec pour première image, l'image fusionnée de l'étape de fusion 105 de l'itération précédente, et pour deuxième image, une image additionnelle i3, i4, i5 comprenant une autre zone de recouvrement avec ladite image fusionnée, le procédé étant réitéré pour chaque image additionnelle.

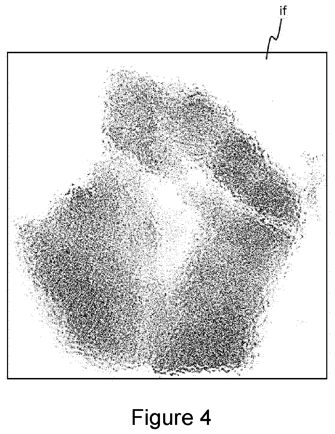

L'image de paume if, comme illustrée figure 4, comprend l'image fusionnée issue de la dernière itération.

Selon l'exemple des figures 3 et 4, le calculateur génère une première image fusionnée i12 issue d'une première itération du procédé de l'invention à partir de la première image i1 de centre de paume et de la deuxième image i2 de partie gauche de paume.

Puis, selon une deuxième itération du procédé de l'invention, avec pour image additionnelle la troisième image i3 de partie droite de paume, le calculateur génère une deuxième image fusionnée à partir de la première image fusionnée i12 pour première image et de l'image additionnelle pour deuxième image.

Ensuite, selon une troisième itération du procédé de l'invention, avec pour image additionnelle la quatrième image i4 de partie haute de paume, le calculateur génère une troisième image fusionnée à partir de la deuxième image fusionnée pour première image et de l'image additionnelle pour deuxième image.

Finalement, selon une quatrième et dernière itération du procédé de l'invention, avec pour image additionnelle la cinquième image i5 de partie basse de paume, le calculateur génère une quatrième image fusionnée à partir de la troisième image fusionnée pour première image et de l'image additionnelle pour deuxième image.

Etant donné que chaque image additionnelle i3, i4, i5 comprend une zone de recouvrement avec la première image i1, et que la première image fusionnée est générée elle aussi à partir de la première image i1, chaque image additionnelle i3, i4, i5 comprend de fait, une zone de recouvrement avec l'image fusionnée de l'itération précédente.

L'image de paume if, comme illustrée figure 4 est la quatrième image fusionnée.

L'image de paume if est issue de la fusion globale des cinq images de paume partielle i1-i5, par fusions successives d'images de paume partielles.

La réitération du procédé de l'invention avec une image additionnelle permet ces fusions successives d'images de paume partielles permettant de reconstruire une paume entière, pourvu que ladite image additionnelle comprenne une zone de recouvrement avec l'image fusionnée de l'itération précédente.

L'invention concerne également un dispositif d'acquisition d'empreinte biométrique par contact comprenant un calculateur apte à mettre en oeuvre les étapes du procédé de l'invention.

Pour un dispositif d'acquisition comprenant une zone d'acquisition rectangulaire par contact de dimensions comprenant un grand côté compris entre 7,5 et 8,5 centimètres, et un petit côté compris entre 7 et 8 centimètres, il est préconisé d'acquérir cinq images i1-i5 de paume partielle telle que décrit et illustré en relation avec la figure 3 pour générer une image de paume if entière selon le procédé de l'invention.

Pour guider un individu à positionner correctement sa main sur la zone d'acquisition, le dispositif peut émettre des consignes de positionnement visuelles ou sonores.

Le dispositif peut également être apte à réitérer une consigne de positionnement en vue d'une nouvelle acquisition d'image de paume partielle, si le positionnement n'est pas correct.

Par exemple, un positionnement de main est incorrect si la zone de recouvrement d'une image de paume partielle avec une autre image de paume partielle est insuffisante.

Il est également possible d'utiliser le procédé de l'invention pour générer une image de paume comprenant la partie de main localisée dans le prolongement de l'auriculaire sur le côté de la main, dite paume de l'écrivain, si la zone de recouvrement est suffisante (se référer aux critères de validation selon l'étape de validation 102).

Il est à noter que ce procédé est applicable aux empreintes digitales, pour générer une image de doigt à partir d'images de doigt partiel.

En conséquence, ce procédé est applicable pour générer une image de main complète comprenant une paume et des doigts, à partir d'images de doigts et de paume partiels ou entiers.

Le procédé de l'invention permet de générer une image de paume ou de main, avec un dispositif d'acquisition compact et de faible puissance de calcul, quasiment en temps réel et sur le terrain, c'est-à-dire en tout lieu où un besoin est exprimé.

## Revendications

1. Procédé de génération d'une image de paume entière (if) d'un individu par un calculateur à partir d'une première image (i1) de paume partielle de l'individu et d'une deuxième image (i2) de paume partielle dudit individu comprenant une zone de recouvrement (Z) avec ladite première image (i1), ledit procédé comprenant
- une étape de détection (100) de premiers points caractéristiques (P1) de la paume dans la première image (i1) et de deuxièmes points caractéristiques (P2) de la paume dans la deuxième image (i2), pour un type de points caractéristiques prédéterminé,
- une étape de couplage (101) générant une pluralité de couples de points caractéristiques par la mise en correspondance dans la zone de recouvrement (Z) d'une pluralité de premiers points caractéristiques (P1) avec une pluralité de deuxièmes points caractéristiques (P2),
- une étape de calcul (103) d'une transformation géométrique globale (T12) associée à ladite mise en correspondance, ladite transformation géométrique globale comprenant les sous-étapes suivantes :
(1) sélectionner une image de référence parmi la première image (i1) et la deuxième image (i2) ;
(2) déterminer la transformation géométrique à appliquer à tous les pixels de l'image qui n'est pas l'image de référence pour que la première image (i1) se superpose à la deuxième image en la zone de recouvrement (Z) en minimisant une erreur globale résiduelle ;
- une étape de détermination (104) pour chaque couple de points de la pluralité de couples de points caractéristiques, d'une transformation géométrique locale (t12a-t12n), ladite transformation géométrique locale (t12a-t12n) étant déterminée de manière à minimiser une erreur locale ;
- une étape de fusion (105) de la première image (i1) avec la deuxième image (i2) en une image fusionnée (i12), en fonction de la transformation géométrique globale (T12) et des transformations géométriques locales (t12a-t12n), l'image fusionnée (i12) étant obtenue par superposition de l'image de référence avec la transformée de l'image autre que de référence par la transformation géométrique globale (T12) et des transformations géométriques locales (t12a-t12n), l'image de paume (if) comprenant l'image fusionnée (i12).

2. Procédé de génération selon la revendication précédente, le type de points caractéristiques prédéterminé étant choisi parmi une liste comprenant le type descripteur ORB, le type descripteur SIFT, le type minutie.

3. Procédé de génération selon l'une quelconque des revendications précédentes, comprenant en outre une étape de validation (102) dans laquelle la mise en correspondance est validée ou invalidée, les étapes de détection (100), de couplage (101) et de validation (102) étant réitérées avec un autre type prédéterminé de points caractéristiques si la mise en correspondance de l'itération précédente est invalidée.

4. Procédé de génération selon la revendication précédente, le type prédéterminé associé à chaque itération étant fonction d'un ordre préétabli.

5. Procédé de génération selon l'une quelconque des revendications 3 à 4, la mise en correspondance étant validée si la pluralité de couples de points caractéristiques comprend un nombre de couples supérieur à un premier seuil prédéterminé et est associée à une surface induite (S) de paume supérieure à un deuxième seuil prédéterminé.

6. Procédé de génération selon l'une quelconque des revendications précédentes, l'étape de calcul (103) comprenant le calcul d'une transformation linéaire globale et d'une erreur globale résiduelle associée, une transformation non linéaire globale étant calculée si l'erreur globale résiduelle est supérieure à une erreur seuil prédéterminée.

7. Procédé de génération selon l'une quelconque des revendications précédentes, une transformation géométrique locale (t12a-t12n) étant déterminée de sorte à minimiser une erreur locale résiduelle pour le couple de points associé selon l'étape de détermination (104), l'étape de fusion (105) comprenant pour chaque couple de points, une modification des pixels de la première image (i1) ou de la deuxième image (2) dans une région de taille prédéterminée comprenant ledit couple de points, en fonction de la transformation géométrique locale (t12a-t12n) associée audit couple de points.

8. Procédé de génération selon la revendication précédente, des pixels appartenant à plusieurs régions étant modifiés selon une moyenne des transformations géométriques locales associées auxdites régions.

9. Procédé de génération selon l'une quelconque des revendications précédentes, à partir en outre d'au moins une image additionnelle (i3, i4, i5) de paume partielle, comprenant la réitération des étapes de détection (100), de couplage (101), de calcul (103), de détermination (104) et de fusion (105), avec pour première image, l'image fusionnée de l'étape de fusion (105) précédente, et pour deuxième image, une image additionnelle (i3, i4, i5) comprenant une autre zone de recouvrement avec ladite image fusionnée, le procédé étant réitéré pour chaque image additionnelle, l'image de paume (if) comprenant l'image fusionnée issue de la dernière itération.

10. Produit programme d'ordinateur comprenant les instructions de programme mettant en oeuvre les étapes du procédé de génération selon l'une quelconque des revendications 1 à 9, lorsque les instructions de programme sont exécutées par un ordinateur.

11. Dispositif d'acquisition d'empreinte biométrique par contact comprenant un calculateur apte à mettre en oeuvre les étapes du procédé de génération selon l'une quelconque des revendications 1 à 9.

## Patentansprüche

1. Verfahren zur Generierung eines Bilds (if) einer ganzen Handfläche einer Person durch einen Rechner ausgehend von einem ersten Bild (i1) einer Teilhandfläche der Person und von einem zweiten Bild (i2) einer Teilhandfläche der Person, das eine Überlappungszone (Z) mit dem ersten Bild (i1) enthält, wobei das Verfahren enthält
- einen Schritt der Erkennung (100) erster charakteristischer Punkte (P1) der Handfläche im ersten Bild (i1) und zweiter charakteristischer Punkte (P2) der Handfläche im zweiten Bild (i2), für einen vorbestimmten Typ charakteristischer Punkte,
- einen Kopplungsschritt (101), der durch den Abgleich einer Vielzahl erster charakteristischer Punkte (P1) mit einer Vielzahl zweiter charakteristischer Punkte (P2) in der Überlappungszone (Z) eine Vielzahl von Paaren charakteristischer Punkte generiert,
- einen Schritt der Berechnung (103) einer dem Abgleich zugeordneten globalen geometrischen Transformation (T12), wobei die globale geometrische Transformation die folgenden Teilschritte enthält:
(1)Auswahl eines Bezugsbilds unter dem erstem Bild (i1) und dem zweiten Bild (12);
(2) Bestimmung der an alle Pixel des Bilds, das nicht das Bezugsbild ist, anzuwendenden geometrischen Transformation, damit das erste Bild (i1) das zweite Bild in der Überlappungszone (Z) unter Minimierung eines globalen Restfehlers überlagert;
- einen Bestimmungsschritt (104) einer lokalen geometrischen Transformation (t12a-t12n) für jedes Paar von Punkten der Vielzahl von Paaren charakteristischer Punkte, wobei die lokale geometrische Transformation (t12a-t12n) so bestimmt wird, dass ein lokaler Fehler minimiert wird;
- einen Schritt der Fusion (105) des ersten Bilds (i1) mit dem zweiten Bild (i2) in ein fusioniertes Bild (i12), abhängig von der globalen geometrischen Transformation (T12) und den lokalen geometrischen Transformationen (t12a-t12n), wobei das fusionierte Bild (i12) durch Überlagerung des Bezugsbilds mit der Transformierten des Bilds anders als das Bezugsbild durch die globale geometrische Transformation (T12) und lokale geometrische Transformationen (t12a-t12n) erhalten wird, wobei das Handflächenbild (if) das fusionierte Bild (i12) enthält.

2. Generierungsverfahren nach dem vorhergehenden Anspruch, wobei der vorbestimmte Typ charakteristischer Punkte aus einer Liste ausgewählt wird, die den Typ ORB-Deskriptor, den Typ SIFT-Deskriptor, den Typ Minuzie enthält.

3. Generierungsverfahren nach einem der vorhergehenden Ansprüche, das außerdem einen Schritt der Gültigkeitserklärung (102) enthält, in dem der Abgleich für gültig erklärt oder für ungültig erklärt wird, wobei die Schritte der Erkennung (100), der Kopplung (101) und der Gültigkeitserklärung (102) mit einem anderen vorbestimmten Typ charakteristischer Punkte wiederholt werden, wenn der Abgleich der vorhergehenden Iteration für ungültig erklärt wird.

4. Generierungsverfahren nach dem vorhergehenden Anspruch, wobei der jeder Iteration zugeordnete vorbestimmte Typ von einer vorab festgelegten Reihenfolge abhängt.

5. Generierungsverfahren nach einem der Ansprüche 3 bis 4, wobei der Abgleich für gültig erklärt wird, wenn die Vielzahl von Paaren charakteristischer Punkte eine größere Anzahl von Paaren als eine erste vorbestimmte Schwelle enthält und einer induzierten Handflächenfläche (S) zugeordnet ist, die größer ist als eine zweite vorbestimmten Schwelle.

6. Generierungsverfahren nach einem der vorhergehenden Ansprüche, wobei der Rechenschritt (103) die Berechnung einer globalen linearen Transformation und eines zugeordneten globalen Restfehlers enthält, wobei eine globale nichtlineare Transformation berechnet wird, wenn der globale Restfehler größer ist als ein vorbestimmter Schwellenfehler.

7. Generierungsverfahren nach einem der vorhergehenden Ansprüche, wobei eine lokale geometrische Transformation (t12a-t12n) bestimmt wird, um einen lokalen Restfehler für das zugeordnete Paar von Punkten gemäß dem Bestimmungsschritt (104) zu minimieren, wobei der Fusionsschritt (105) für jedes Paar von Punkten eine Änderung der Pixel des ersten Bilds (i1) oder des zweiten Bilds (2) in einem das Paar von Punkten enthaltenden Bereich vorbestimmter Größe enthält, abhängig von der dem Paar von Punkten zugeordneten lokalen geometrischen Transformation (t12a-t12n).

8. Generierungsverfahren nach dem vorhergehenden Anspruch, wobei zu mehreren Bereichen gehörende Pixel gemäß einem Mittelwert der den Bereichen zugeordneten lokalen geometrischen Transformationen verändert werden.

9. Generierungsverfahren nach einem der vorhergehenden Ansprüche, ausgehend außerdem von mindestens einem zusätzlichen Handfläche-Teilbild (i3, i4, 15), das die Wiederholung der Schritte der Erkennung (100), der Kopplung (101), der Berechnung (103), der Bestimmung (104) und der Fusion (105) enthält, mit dem fusionierten Bild des vorhergehenden Fusionsschritts (105) als erstem Bild und einem zusätzlichen Bild (i3, i4, i5) als zweitem Bild, das eine andere Überlappungszone mit dem fusionierten Bild enthält, wobei das Verfahren für jedes zusätzliche Bild wiederholt wird, wobei das Handflächenbild (if) das von der letzten Iteration stammende fusionierte Bild enthält.

10. Computerprogrammprodukt, das die Programmanweisungen enthält, die die Schritte des Generierungsverfahrens nach einem der Ansprüche 1 bis 9 durchführen, wenn die Programmanweisungen von einem Computer ausgeführt werden.

11. Vorrichtung zur Erfassung eines biometrischen Abdrucks durch Kontakt, die einen Rechner enthält, der fähig ist, die Schritte des Generierungsverfahrens nach einem der Ansprüche 1 bis 9 durchzuführen.

## Claims

1. Method for generating an image (if) of an entire palm of an individual using a computer, based on a first partial image (i1) of a palm of the individual and on a second partial image (i2) of a palm of said individual comprising a zone (Z) overlapping with said first image (i1), said method comprising:
- a step (100) of detecting first characteristic points (P1) of the palm in the first image (i1) and second characteristic points (P2) of the palm in the second image (i2), for a predetermined type of characteristic points;
- a pairing step (101) generating a plurality of pairs of characteristic points by matching a plurality of first characteristic points (P1) with a plurality of second characteristic points (P2) in the overlapping zone (Z);
- a step (103) of computing an overall geometric transformation (T12) associated with said matching, said overall geometric transformation comprising the following substeps:
(1) selecting a reference image from among the first image (i1) and the second image (i2);
(2) determining the geometric transformation to be applied to all the pixels of the image that is not the reference image, so that the first image (i1) is superimposed on the second image (i2) in the overlapping zone (Z), while minimizing an overall residual error;
- a step (104) of determining a local geometric transformation (t12a-t12n) for each pair of points of the plurality of pairs of characteristic points, said local geometric transformation (t12a-t12n) being determined so as to minimize a local error;
- a step (105) of merging the first image (i1) and the second image (i2) into a merged image (112), as a function of the overall geometric transformation (T12) and of the local geometric transformations (t12a-t12n), with the merged image (112) being acquired by superimposing the reference image with the transform of the image other than the reference image by the overall geometric transformation (T12) and local geometric transformations (t12a-t12n), with the palm image (if) comprising the merged image (i12).

2. Generation method according to the preceding claim, with the predetermined type of characteristic points being selected from among a list comprising an ORB type descriptor, a SIFT type descriptor, a minutia type descriptor.

3. Generation method according to any one of the preceding claims, further comprising a validating step (102), in which the matching is validated or invalidated, with the detecting (100), pairing (101) and validating (102) steps being repeated with another predetermined type of characteristic points if the matching of the previous iteration is invalidated.

4. Generation method according to the preceding claim, with the predetermined type associated with each iteration being a function of a pre-established order.

5. Generation method according to any one of Claims 3 to 4, with the matching being validated if the plurality of pairs of characteristic points includes a number of pairs that is greater than a first predetermined threshold and is associated with an induced palm surface (S) that is greater than a second predetermined threshold.

6. Generation method according to any one of the preceding claims, with the computing step (103) comprising computing an overall linear transformation and an associated overall residual error, with an overall non-linear transformation being computed if the overall residual error is greater than a predetermined threshold error.

7. Generation method according to any one of the preceding claims, with a local geometric transformation (t12a-t12n) being determined so as to minimize a local residual error for the associated pair of points according to the determining step (104), with the merging step (105) comprising, for each pair of points, a modification of the pixels of the first image (i1) or of the second image (2) in a region of predetermined size comprising said pair of points, as a function of the local geometric transformation (t12a-t12n) associated with said pair of points.

8. Generation method according to the preceding claim, with pixels belonging to several regions being modified according to an average of the local geometric transformations associated with said regions.

9. Generation method according to any one of the preceding claims, also from at least one additional partial image (i3, i4, 15) of a palm, comprising repeating the steps of detecting (100), pairing (101), computing (103), determining (104) and merging (105), with the merged image from the preceding merging step (105) as the first image, and an additional image (i3, i4, 15) comprising another zone overlapping with said merged image as the second image, the method being repeated for each additional image, the palm image (if) comprising the merged image derived from the last iteration.

10. Computer program product comprising the program instructions implementing the steps of the generation method according to any one of Claims 1 to 9, when the program instructions are executed by a computer.

11. Contact biometric print acquisition device comprising a computer capable of implementing the steps of the generation method according to any one of Claims 1 to 9.
